# EUROPEAN PATENT APPLICATION

(11) **EP 1 271 951 A1**
(43) Date of publication of application: **02.01.2003**
(21) Application number: 01870135.9
(22) Date of filing: 22.06.2001
(51) Int. Cl.: H04N 7/167

(54) **Conditional access system for digital data by key decryption and re-encryption**

(71) Applicant: Octalis S.A., 1348 Louvain-la-Neuve (BE)
(72) Inventor: Mas Ribés, Joan-Maria, 43206 Reus (ES)
(74) Representative: Brants, Johan Philippe Emile

(57) **Abstract**

The invention relates to a multi layered conditional access process for processing a protected digital content between a content protector an intermediate receiver and final destination means, comprising the steps of:
a) the encryption by the content protector of a key or keys for accessing said protected digital content,
b) the transmission from the content protector to the intermediate receiver of said encrypted key or keys
c) the decryption and re-encryption of said key or keys by the intermediate receiver,
d) the transmission of the re-encrypted key to final destination means, and
e) the decryption of said re-encrypted key by the final destination means.

The invention is further related a storage medium having recorded thereon encrypted program data in a data format able to perform the process of the invention and to an insertable electronic smart card for use in a multi layered conditional access system.

## Description

This invention is related to the field of digital signal processing, and more particularly to the conditional access processing of encrypted data such as for further treatment such as broadcast, satellite or cable video or cinema material storage or projection by a receiver.

Conditional access systems have been typically used to protect TV content, digital or analog. In this scenario, the content distributor (cable operator, terrestrial or satellite broadcaster...) scrambles the TV signal before being broadcasted. At reception, each subscriber has a set-top box with a conditional access module. This conditional access module is responsible for the descrambling of the content.

A digital TV conditional access system is in general organized in 3 levels.

The first and lower scrambling level. At this level, the content is scrambled before distribution. The scrambling module at the distributor uses keys (named Control Words -CW-) which are changed every few seconds. At reception, the descrambling module requires these CW's in order to descramble the content.

The second level in the control level wherein the CW's must be protected before distribution to prevent a eavesdropper from accessing them and thus, access the protected content. CW's are encrypted using a secret key K_{CW} and signed, forming an Entitlement Control Message, or ECM. These ECM's are sent along with the protected content to the receivers.

The third level and management level is the last level of a conditional access. This level manages the distribution of K_{CW} to authorized users. Precisely, the distributor has an updated database of users authorized to access the content. For each one of these users, the distributor generates a Entitlement Management Message which contains the K_{CW} encrypted with the receiver's key (public or secret, depending on the system) K_{U}. All these EMM's are inserted in the content flow.

Traditional digital TV conditional access systems were designed specifically for the broadcast world, in which there is a content distributor and a potentially unlimited number of receivers.

The content is distributed in real-time. TV programs are broadcasted at a specific time, and the receivers view the programs at that specific moment. This means that content and conditional access information (ECM's and EMM's) is sent together through the same flow.

The broadcasted flow must address every individual decoder (or group of decoders), given that authorizations are managed at a receiver level.

The processing of encrypted and non-encrypted program data and the management of associated encryption and scrambling codes for storage, billing and other applications presents a number of further problems. One problem is presented by the need to maintain encryption code security when a digital data such program is stored by a consumer in either encrypted or non-encrypted form for viewing at a later time.

Further problems are the lack of flexibility with the known conditional access systems.

These problems are addressed by a system according to the present invention. Hereinafter the term "encryption" encompasses scrambling functions to the extent that the functions are used to prevent unauthorized use. The invention provides therefor a multi layered conditional access process for processing a protected digital content between a content protector an intermediate receiver and final destination means, comprising the steps of:
a) the encryption by the content protector of a key or keys for accessing said protected digital content,
b) the transmission from the content protector to the intermediate receiver of said encrypted key or keys
c) the decryption and re-encryption of said key or keys by the intermediate receiver,
d) the transmission of the re-encrypted key to final destination means, and
e) the decryption of said re-encrypted key by the final destination means.

Preferred embodiments are disclosed in sub-claims 2 to 9.

The invention relates to a multi-layered conditional access system in which the keys for accessing digital content are sent encrypted with a receiver's key. When the receiver conditional access system is required to access the protected digital content, it obtains the content key by decrypting it and re-encrypts said content key with a public key of the final destination means and sends it to the same final destination means.

In the present invention the digital content is encrypted only once by means of a secret key. The distributor of the digital content can send the content by different means (broadcast, physical support, point to point) to any receiver (authorized or not). Authorized receivers request the keys for accessing the digital content, before, after or at the same time as the reception of the protected digital content. The authorization to access the digital content may be subject to certain restrictions or conditions (entitlements, usage rights...). The content protector sends the secret key encrypted with the receiver's public key so that only that specific receiver will be able to access the secret key. When the receiver wants to access the contents, the access conditions are verified -if any. The encrypted secret key is sent to a secure cryptographic module (SCM) such as smart cards or PCMCIA cards, where the secret key is decrypted and re-encrypted with the public key associated with the final destination means, such as projection equipment.

A second aspect of the invention is a device such as a smart card able to perform said encryption or decryption.

In the following detailed description, reference is made to the accompanying figures which form a part hereof, and in which is shown by way of illustration specific embodiments in which the invention may be practised. The drawings should not be construed as limiting the scope of the invention.

### Brief description of the figures

Figure 1 shows a schematic representation of a preferred embodiment of the process according to the invention.
Figure 2 shows a simple XML document exemplifying the message sent from content protector to receiver in figure 1.

The invention relates to a conditional access system in which the keys for accessing the protected content are re-encrypted one or more times before being used to actually access the content.

The conditional access system of the invention allows an extreme controlled flexibility. Last minute change of final destination means equipment in case of failure is made possible and it is possible to switch to another equipment during the transmission with minimal loss of data.

The present multi-layered conditional access system is based on the principle of trusted delegation. The protector of the content, which may be the owner, the distributor or a third party having rights to be protected on the digital content wants the content to be protected for transmission from one point to the other. Given that sometimes the exact origin and more in particular the destination ends are not known a-priori, the protector of the content delegates the management of the decryption key to a trusted device, such as a smart card managed by itself.

Hereafter the concept in the case of a 2-layered conditional access system is described in detail, but this formalization can be extended to any n-layered conditional access system.

As a non-limitative example keys, conditions and signatures are denoted as:
S_{K} : the key used to protect the content,
{C₁, ...Cₙ} : the set of conditions defining the rights on the content which can be empty in which case rights are implicitly granted
P_{PbK}, P_{PrK} : the content protector's public and private key
R_{PbK}, R_{PrK} : the receiver's public and private key
D_{PbK}, D_{PrK} : the final destination's public and private keys

We denote further:
{X}R_{PrK}: X signed with R_{PrK} for verification we use R_{PbK}
D_{PbK} [X] : X encrypted with key D_{PbK} (only D_{PrK} can decrypt X)

The content protector will send a message to the receiver containing the encrypted content key, the conditions required to access the content and optionally also a signature on the message, denoted as follows:
{ R_{PbK}[S_{K}], {C₁, ...Cₙ} }P_{PrK}

When an intermediate receiver is requested to provide the final destination means with the key to access the content, it will first verify that all access conditions {C₁, ...Cₙ} are met. If they are all met, then the receiver will proceed to decrypt S_{K} given that he possesses the R_{PrK} and re-encrypt it with the destination's public key D_{PbK}, and eventually sign it:
{ D_{PbK}[S_{K}] }R_{PrK}

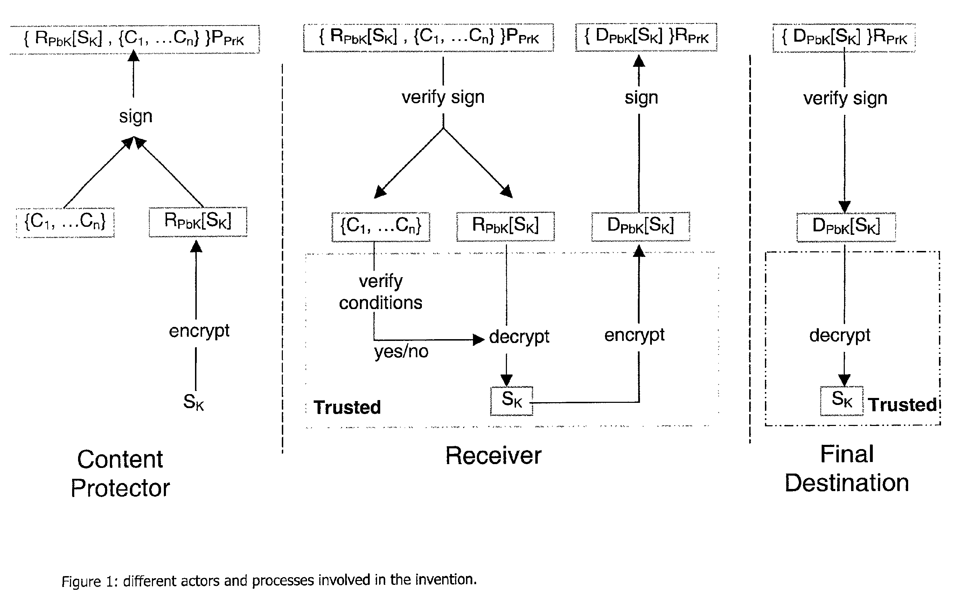

The boxes in figure 1 represent the operations that the content provider trusts are going to be performed in a secure way and within a secured environment. Practically these boxes will be Conditional Access Modules (CAM); being tamper-proof devices capable of performing cryptographic and condition verification operations such as smart cards or PCMCIA cards. Typically, private keys are stored in such devices. These devices act in the system as delegates of the content protector within remote systems, a priori untrusted, but that thanks to these delegates, become trusted for specific operations.

Figure 1 depicts a 2-layered conditional access system (from content protector to receiver, and from receiver to final destination). It is easy to generalize a 2-layered into an n-layered conditional access system, merely to copy the middle section of figure 1 and the features related thereto:
{ R1_{PbK}[S_{K}], {C1₁, ...C1ₙ} }P_{PrK}
{ R2_{PbK}[S_{K}], {C2₁, ...C2ₙ} }R1_{PrK}
...
{ D_{PbK}[S_{K}] }Rn_{PrK}

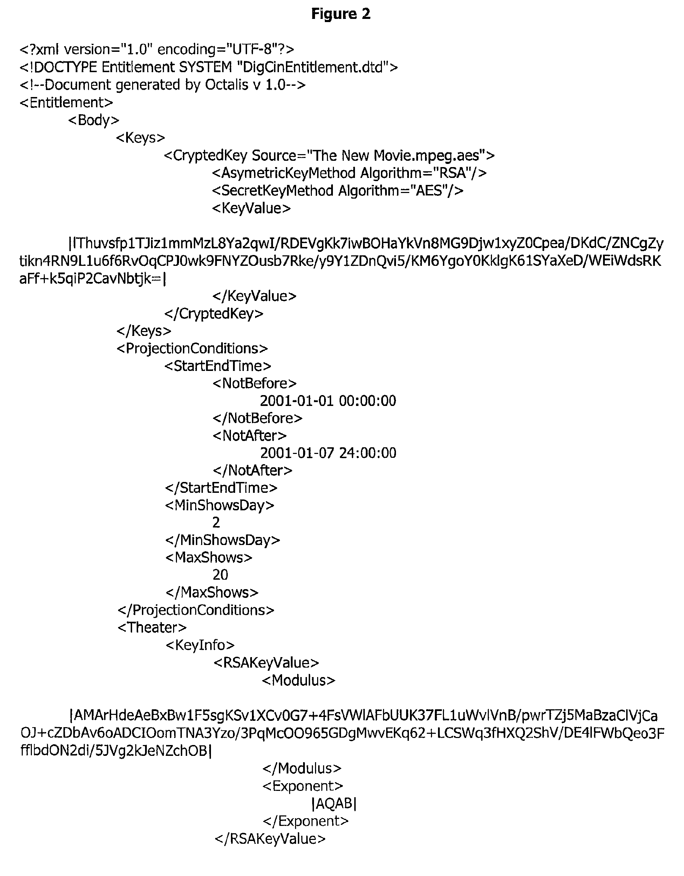

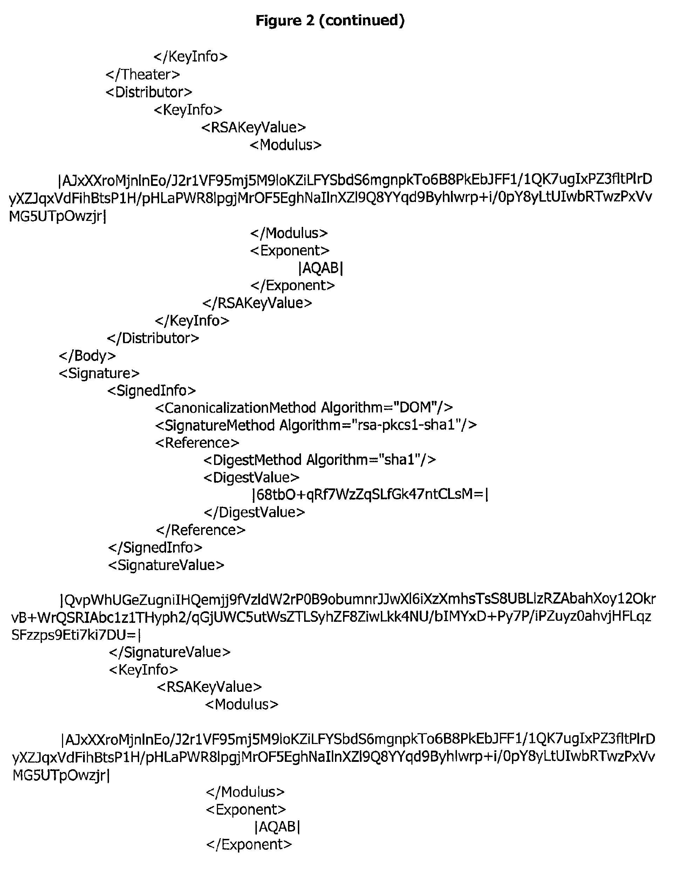

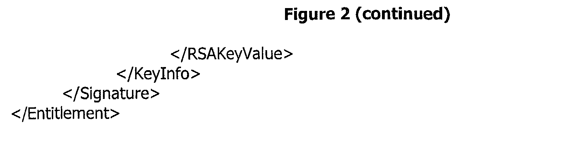

Figure 2 is a schematic representation of an Extensible Markup Language (XML) file representing an embodiment of an entitlement according to the invention sent from a distributor to a theater.

In this example, the entitlement applies only to one file, named "The New Movie.mpeg.aes". The structure is in detail explained in figure 2 and clear for a person skilled in the art.

The field Keys contains the key used to encrypt the file, encrypted with the RSA public key of the theater. The CryptedKey field specifies the file, in this case "The New Movie.mpeg.aes, the AsymetricKey field defines the asymmetric cryptographic algorithm used (RSA). It is clear that all the key and algorithms are an example and can be changed, modified or altered. The SymatricKeyMethod defines the algorithm used to encrypt the content (AES). The KeyValue defines the content encryption encrypted key.

The file Projection Conditions defines what are the projection rights i.e. under what conditions a projection can take place.

StartEndTime defines the validity period of the entitlement, MinShowsDay indicates the minimum number of showings per day of the movie, MaxShows indicates the maximum number of shows during the validity period of the entitlement. Again it is clear that other condition can be implemented.

The files Theater and Distributor are the public keys of the theater and the distributor. It is preferred that these keys serve as unique identifiers of the entities. Again any other mean of identification is suitable, such as a name being the most basic key.

The last depicted file is the Signature of the entitlement by the distributor.

There are several possible variants of the invention, depending on the combination of cryptographic algorithms and operations.

In a preferred embodiment a public-key cryptography is used because in practice it simplifies the design and implementation of the system. However, nothing prevents us from using for example symmetric cryptography.

Signature of encryption keys guarantees the integrity of the information. This is normally only required when information is transmitted through an insecure channel. One could also use message authentication codes, or nothing at all.

In the messages exchanged one could also use certificates (signed statements) to certify keys or authorizations. Again these are options at design and implementation time and are known in the art.

In the description of the preferred embodiment above we have assumed for the formalization that one unique key is used to encrypt the whole content. But in some cases, several keys are used, or a single key diversified several many times. The invention can be generalized as to include all the required secret information for proper decryption of content.

Furthermore, the content could be composed of several files or parts, each one encrypted with a different key (such is the case of digital cinema), but only one set of content access conditions.

The conditions that define the content access rights can be explicit and preferably signed for security reasons or implicit by the application itself.

In an n-layered conditional access system, the condition set can vary in content or its signature. At each layer, content access rights can be reduced in which case preferably with a new signature or remain equal in which case the signature could be the original or one made by the new intermediate receiver.

The invention is in particular related to the conditional access system for use in digital cinema distribution and by the contribution channels for professional TV.

Digital Cinema is the generic term from expressing the distribution of movies in digital format from distributor to theaters.

Different approaches have been proposed for movie distribution, but they all share some common concepts related to one level conditional access.

The conditional access for digital cinema relates exclusively to the relation between movie distributor and theaters, which is the last step of the digital cinema chain. The distributor packages the different files depending on the target theaters, for example different languages, subtitles..., and sends these packages to the theaters. The transmission media is irrelevant from a conditional access point of view: it could be satellite, high-speed network or physical media. Before transmission, the different files composing a package are encrypted to protect them during distribution.

Theaters being an intermediate receiver obtain projection rights for specific packages such as versions of a movie. The objective of the conditional access for digital cinema is to enforce these projection rights from end-to-end, being one end the distributor being the content protector, and the other the projector itself being the final destination.

A possible known approach would be to take the same as for the digital TV broadcasting. One could send the movie with ECM's and EMM's, and at reception, store that flow on disk. In this case, the distributor would include in the flow, EMM's for all possible projectors authorized to play the movie. At the theater the conditional access system would need simply send the file to a specific projector. This approach, however, presents some drawbacks that the proposed invention solves: whether the distributor knows a priori what specific projector will play the movie and send only those EMM's, or the distributor sends the movie along with all the EMM's for all projectors in authorized theaters. In any case, there are some problems.

In the first case, the system lacks the required degree of flexibility in case a projector needs to be replaced at last minute before a projection. The theater would need to receive again the movie with the new EMM's for the new projector, which is unrealistic, or the conditional access module would need to moved from one projector to another. In any case, the solution is far from optimal.

In the second case the security of the whole system is compromised: given that the flow would contain EMM's for all projectors in a theater, nothing would prevent projecting the movie in two or more separate screens at the same time with the authorization for one unique show at a time.

The proposed invention solves both this problems, and it greatly simplifies the conditional access for digital cinema. The commercial idea is for the distributor to assign projection rights to theaters, and let theaters manage those rights in a secure way.

The objective of the digital cinema distributor is to enforce the rental agreements with theaters as of the projection rights for individual movies. The distributor will typically encrypt the different files that compose a movie, for example one for video, one for audio and another for subtitles with different keys, assemble these files into packages for distribution, and send these to the theaters. The theaters will store the encrypted package locally for as long as their rental agreement with the distributor lasts. At projection time, the files within a package are extracted and sent to the playing devices, which preferably should decrypt the files right before playing. There are several considerations that the invention has taken into account.

In the invention, files will only be encrypted once: digital movie files are huge, and one could not afford the time and disk space for encrypting video files several times.

Preferably files should remain encrypted for as long as possible. Ideally, it should be the lenses of the projector who would perform decryption. The invention also provides the commercial advantage that distributors give rights to theaters, not to projectors. The projection rights reflect the rental agreement conditions signed between theater and distributor. The conditional access system according to the invention can enforce these projection rights.

Theaters are free to change the final destination means such as screens, projectors or schedules without notice as long as the rental agreements are met.

The idea of the conditional access system according to the invention for the digital cinema is to let theaters manage their projection rights in a secure way from the distributor's point of view. The way to achieve that is to have a distributor trusted device that will manage the projection rights obtained by the theater from the distributor. This trusted device will also decrypt the key used to protect the content, and re-encrypt it with the public key of the projection device.

The device, for being really trusted by the distributor, must be tamper-proof, capable of performing cryptographic operations, with memory capacity, and programmed by the distributor. Typically one would use smart cards or PCMCIA cards.

Another example is given for a unique file for a specific movie distribution. The distributor (in this case the distributor is the content protector) encrypts the file using a secret key S_{K}. For each theater with which has signed rental agreements, the distributor will prepare an entitlement such as
{ R_{PbK}[S_{K}] , {C₁, ...Cₙ} }P_{PrK}

Where R_{PbK} is the public key of the theater and P_{PrK} is the private key of the distributor. The condition set {C₁, ...Cₙ} represent the conditions under which a projection can take place, derived from the rental agreement signed between the distributor and the theater.

The means by which the encrypted file and the entitlement are transmitted from distributor to theater are known in the art and are not relevant to the present invention. The same applies to the algorithms used for encryption and decryption. The entitlement can be sent before, after or along the movie file, through the same transmission channel or different.

When a projection is about to take place, the conditional access software will send the entitlement to the distributor trusted device. Within this trusted device resides the private key assigned to the theater, so only this device can decrypt the S_{K}. The conditional access software will also provide the trusted device with all the information necessary to verify that the conditions required for a projection to take place are met. If the trusted device does not contain a list of projector public keys, the conditional access software will also provide that information.

At this point the trusted device first verifies the signature on the entitlement, and then if all conditions are met, and if so, it will decrypt the S_{K} and re-encrypt it with the projector's public key Di_{PbK}. Furthermore, the device could also sign the encrypted S_{K} so the projector can verify that the key has not been tampered with.
{ Di_{PbK}[S_{K}] }R_{PrK}

The conditional access software sends this message to the projector, which will verify the signature, decrypt the S_{K} with its private key Di_{PrK}. At this moment, the projector is ready to receive the encrypted movie, decrypt it with Di_{PbK} and project it.

The approach proposed, and enabled by the invention, has several significant advantages over traditional TV conditional access systems.

The distributor does not need to know precisely what projector will be used for each show at every different theater.

The theater has the freedom to schedule shows as they like, as long as the rental agreement is respected.

The system offers great flexibility in case there is the need to change the projector, for example, because of last minute malfunctioning.

If entitlements would be assigned to projectors, and there is the need for a change of projector, the theater needs to request a new entitlement for this new projector. This has the consequence that the theaters would need a permanent connection with the distributor, which is not always the case. The proposed approach avoids this by only assigning rights to theaters and not projectors.

The use of the method of the invention is also suitable for TV broadcasters.

There is a number of TV broadcasters associations in which their members exchange different kind of programs such as news, or archives, for instance, the European broadcasting Union. These associations typically manage their satellite resources and all the transmissions that take place through their network.

When 2 or more members want to exchange programs, the central management at the EBU needs to send the scrambling keys to both sender and receiver(s). This is normally done via phone calls.

Typically, TV stations have redundant equipment so they can change from one to another in case of failure. This means that the conditional access system must provide this degree of flexibility offered by the invention.

Similar to the digital cinema distribution, the central management could send the encrypted control words or keys to all the equipment in a station that will participate in a program exchange, or only to one. And as discussed in the case of digital cinema distribution, none of the known options is optimal for this scenario.

Sending the key to only one equipment would compromise the transmission in case of equipment failure. The central management would then need to send again the key, but it might be too late to catch up with the transmission.

Sending the keys to all the equipment in a station provides weak security: one could take a specific equipment from one station to another who is not supposed to receive the program.

Here again an n-layered conditional access system (wherein n ≥ 2) according to the invention would solve the problem of control words distribution. The central management would send the control words to the managing equipment of each station in a secure way, and right before the transmission starts, the control words will be sent to the participating equipment encrypted with the public key of the equipment.

In this case a central management will provide the keys and all required information to participants in a transmission. A transmission consists in an emitter station and one or more receiving stations.

Each station, whether emitter or receiving, is supposed to have a station management PC and an undefined number of emitting or receiving equipment connected to it. The concrete equipment that will be used during the transmission should be defined right before the transmission takes place, and, again, there should be the possibility of last minute changes in the equipment in case of malfunctioning, ...

The preferred process is as follows: the central management notifies the stations involved that there will be a transmission taking place at a specific date and time. The central management will communicate the stations all required configuration information for the transmission to take place, and will send a S_{K} encrypted with the public key Ri_{PbK} of each one of the stations. These encrypted keys should be signed by the central management (but it is not required). In this case there are no explicit conditions for a transmission to take place.
{ Ri_{PbK}[S_{K}] }P_{PrK} is the message sent to station number *i*.

Note that in the specific case of digital TV, the standard encryption algorithm is the Common Scrambling Algorithm, which uses weak keys. For that reason the keys are changed very often. If this is the case, S_{K} will be substituted for the required information to generate the sequence of control words CW (weak keys).

The moment the transmission starts, the station management software (instructed by the human operator) will decrypt the S_{K} and re-encrypt it with the public key of the equipment Dj_{PbK} that is going to participate in the transmission, whether as sender or receiver.
{ Dj_{PbK}[S_{K}] }Ri_{PrK}

When the equipment receives this message it does the same as before: verify the signature (if any) and decrypt the S_{K} with its private key Dj_{PbK}.

As the foregoing illustrates, the present invention is in particular directed to a method and smart card apparatus for adding conditional access in digital movies or TV broadcast networks. It is understood, however, that changes may be made to the embodiments described above without departing from the broad inventive concepts thereof. For example, while the present invention is described in the context of a broadcast environment, the same methods and apparatus would work effectively in an interactive system.

Accordingly, this invention is not limited to the particular embodiments disclosed, but is intended to cover all modifications that are within the scope and spirit of the invention as defined by the appended claims.

## Claims

1. A multi layered conditional access process for processing a protected digital content between a content protector an intermediate receiver and final destination means, comprising the steps of:
a) the encryption by the content protector of a key or keys for accessing said protected digital content,
b) the transmission from the content protector to the intermediate receiver of said encrypted key or keys
c) the decryption and re-encryption of said key or keys by the intermediate receiver,
d) the transmission of the re-encrypted key to final destination means, and
e) the decryption of said re-encrypted key by the final destination means.

2. A process according to claim 1, wherein the steps c) and d) are iterated once or more than once between the intermediate receiver and a further receiver.

3. A process according to claim 1 or 2, wherein the key or keys for accessing the digital content are symmetric cryptographic keys.

4. A process according to claim 1, 2 or 3, wherein further the digital content is once encrypted for protection by the content protector and once decrypted by the final destination means.

5. A process according to any of the previous claims 1 - 4, comprising the attachment of identification means, such as a signature to the encrypted and transmitted keys.

6. A process according to any of the previous claims 1 - 5, comprising the attachment of a set of conditions defining the right or rights to the digital content to the encrypted and transmitted keys.

7. A process according to any of claims 1 - 6, wherein the key or keys for the encryption and decryption of the key or keys accessing the digital content are symmetric cryptographic keys.

8. A process according to any of claims 1 - 7 wherein the process is used to distribute a digital movie or parts thereof between a distributor being the content protector a receiver and a projection means being the final destination means.

9. A process according to any of claims 1 -7, wherein the process is used to distribute a program or parts thereof between a TV broadcaster being the content protector a TV channel being the receiver and a television being the final destination means.

10. A storage medium having recorded thereon encrypted program data in a data format able to perform the process of any of the previous claims.

11. Device suitable for use in a multi layered conditional access system for processing encrypted digital data received by a receiver from a content protector or from an intermediate receiver able to perform step c) of claim 1, and optionally also is able to perform a verification of the conditions of claim 6.

12. Device suitable for use in a multi layered conditional access system for processing encrypted digital data received by final destination means from a receiver able to perform step e) of claim 1.
